# EUROPEAN PATENT SPECIFICATION

(11) **EP 3 075 531 B1**
(45) Date of publication and mention of the grant of the patent: **20.03.2024**
(21) Application number: 15162104.2
(22) Date of filing: 31.03.2015
(51) Int. Cl.: B32B 18/00, B32B 5/02, F01D 5/28, F01D 9/00, F01D 11/00, F01D 25/00, F01D 5/18, C04B 37/00, B32B 9/00

(54) **SANDWICH ARRANGEMENT WITH CERAMIC PANELS AND CERAMIC FELTS**
SANDWICHANORDNUNG MIT KERAMIKPLATTEN UND KERAMIKFILZEN
DISPOSITIF SANDWICH AVEC PANNEAUX CÉRAMIQUES ET FEUTRES EN CÉRAMIQUE

(43) Date of publication of application: 05.10.2016
(73) Proprietor: Ansaldo Energia IP UK Limited, London W1G 9DQ (GB)
(72) Inventor: Grasso, Piero-Daniele, 8166 Niederweningen (CH); Stankowski, Alexander, 5303 Würenlingen (CH); Puidokas, Sabrina, 5400 Baden (CH)
(74) Representative: Studio Torta S.p.A.

(56) References cited:
- EP-A1- 1 815 975
- EP-A1- 2 033 772
- EP-A2- 2 716 871
- WO-A1-2012/118516
- DE-A1-102013 110 381
- US-A- 5 942 064
- US-A1- 2005 022 921
- US-A1- 2005 118 392
- US-A1- 2009 324 421
- US-B1- 6 187 123

## Description

### Technical Field

The present invention relates to advanced concepts for modular Industrial Gas Turbine (IGT) components, which are based on the principle of using best suited materials for individual sections in every area of IGT components according to the state of the art referring to claim 1.

### Background of the Invention

The selection of most adequate material is driven by environmental, thermal, mechanical and thermos-mechanical load conditions under service exposure. According to this design concept, monolithic ceramic and ceramic matrix composite (CMC) materials are especially beneficial to be applied in highly temperature loaded areas, whereas metal alloys are preferentially used mainly in mechanically or thermos-mechanically loaded sections. This principle implicates the utilization of monolithic ceramics and especially CMCs for the generation of platforms and airfoils, inserts or more generally as liner material for the respective sections.

The approach is also an extension of the new reconditioning/repair concept referring to WO 2014/146829 A1, adapted to higher T applications. As a matter of fact, monolithic ceramic materials and ceramic matrix composites are less prone to thermal degradation effects when exposed to high and very high temperatures (1000-1700°) and cyclic operation regimes. Compared to the use of metallic alloys, which would have to be protected by an environmental metallic coating combined with a thermal barrier coating (i.e., TBC system), a considerably longer overall component lifetime is enabled.

Ceramic systems (incl. CMCs) might also need environmental and thermal barrier protection coatings made of ceramics, especially in the higher temperature range.

Based on this concept, there are mainly two factors, driving the development of monolithic and ceramic composite made bodies for the Turbine Blading of land based IGT:
1. Component T resistance and increased lifetime.
2. The cooling requirements for the front stages of Turbine blading can be substantially reduced by providing the blading (rotating and/or stationary) with a ceramic shell as a protective barrier against the impact of the hot gas during operation.

Typical drawbacks of today's standard monolithic ceramic and CMC systems in modular IGT component designs:
1. Brittle behaviour and low fracture toughness (monolithic ceramic).
2. Very limited fatigue behaviour, especially monolithic ceramic, but also CMC systems.
3. Limit creep resistance (CMC).
4. Cost intensive (CMC).

Commercially available, as well as in literature described CMC material still suffers from:
- Mechanical strength values of CMCs which are generally at the limit of the design requirements, when considering turbine parts and especially in case of rotating blading (creep loading). Considering a simple functional split (i.e., mechanical and thermal decoupling) of the different component sections, such as, splitting the component into different subcomponents, where certain areas have mainly to sustain the mechanical load and other component sections will have to resist to a high thermal loading (as mentioned in several patents and open literature) is not sufficient. Some specific areas of the shell will still be submitted to very high temperatures and to non-negligible mechanical loading from the very high gas mass flow, gas pressure and centrifugal load.
- Strong anisotropic mechanical and physical CMC material properties. This phenomenon is based on the intrinsic 2D/3D woven microstructure of inorganic fibres within the CMC composite. Especially in the case of a need for thicker material strengths, multiple layer arrangements are unavoidable, additionally increasing the intrinsic inhomogeneity and leading to the risk of local defects or complete delamination in between the individual stacked layers. Additionally to this aspect, the overall risk of increasing porosity raises with the number of layers, which are used to form the final shell or liner section.
- Limited creep behaviour, which is mainly driven by the fibre properties contained as reinforcement elements within the CMC microstructure. This peculiarity of ceramic composite material limits even further the design flexibility and subsequent application in areas of combined mechanical and high temperature loading over long operation times.
- High thermal gradients (temperature inhomogeneity) around the airfoil are to be expected. Out to the fact that the resulting maximum thermal and mechanical loading can be very localized, this bears a high risk of local damage formation, which might ultimately lead to a complete failure of the CMC system.

Document WO 2014/022344 A1 discloses a CMC core cowl for an aircraft gas turbine engine, comprising a plurality of duct panels each duct panel joined to an adjacent duct panel along a longitudinal lap joint. Each duct panel further comprises an interlaced fiber structure having ceramic fibers oriented in substantially transverse directions. A ceramic matrix surrounds the ceramic fibers of the ceramic fiber structure. The ceramic fibers and matrix are formed into a substantially cylindrical shape having a fore end and an aft end, and having means for mechanical attachment circumferentially oriented around the fore end and along the longitudinal lap joints. The fore end further includes additional CMC material having fibers oriented in a third preselected direction, thereby providing additional strength to for mechanical attachment at the fore end and at lap joints.

Document EP 2 033 772 A1 discloses a laminate structure comprising at least a first layer joined to a second layer by an intermediate layer, the material of the first layer being different to the material of the second layer, and the intermediate layer is composed of fibers of interwoven different first and second materials. An adhesive is provided between the intermediate layer and at least one of the first layer and second layer. The first and second layers may be provided as thin or thick sheets, plates, or some combination sheet and plate. Alternatively, one of the layers may be provided as a shaped substrate which the other layer is applied to. The first and second layers may be flexible or rigid. The intermediate layer may take the form of a woven fabric to which a coating may be applied to one side, or different coatings may be applied to either side, where the coating applied to one side of the intermediate layer is capable of adhering to the material(s) of the intermediate layer and one of the first or second layers.

Document US 2009/324421 A1 discloses spacing elements that are especially preferably uniformly distributed between shell and support structure. The spacing elements are formed in each case in the form of a soldering globule, which by soldering, especially surface-soldering, are connected to the support structure and the shell. A connection of the shell to the support structure is therefore carried out by soldering, specifically preferably at individual points. The solder consists of small solder globules which during the soldering process do not completely melt but only partially melt. These solder globules are frequently referred to in electrical engineering by the term "ball-grid". In this way, a space in the form of a narrow gap can be formed between the shell and the support structure, wherein heat can be transferred to the support structure only at the thus-formed soldering points. The soldering globules form a large surface according to the invention so that heat can be transmitted directly to the cooling medium which flows through the space. As the number of spacing elements increases per area unit, the surface of the spacing elements over which cooling medium can flow is also altogether increased which on the one hand improves cooling and on the other hand improves the connection of the shell to the support structure. The improved connection in its turn again enables a more rigid and thinner shell. Document DE 10 201 3110381 A1 discloses a layer arrangement for e.g. hot gas path component of turbine, has substrate layer and ceramic matrix composite layer in between which non-metallic spacer is formed to define the pockets filled with heat insulating substances. The layer arrangement has a substrate layer and a ceramic matrix composite layer in between which a non-metallic spacer is formed to define the pockets. The substrate layer is formed with super-alloy nickel-based or ceramic. The non-metallic spacer is provided with a thermal protecting coating and a cutting rib. The pockets are filled with the heat insulating substances.

Document EP 1 815 975 A1 discloses a ceramic matrix laminate "CML" made of a ceramic felt core material sandwiched between two CMC skins. Document EP 1 815 975 A1 further discloses the use of an adhesive between the core and the peripheral skins and an infiltration step.

### Summary of the Invention

It is an object of the present invention to summarizing the limits and shortcomings of today's monolithic ceramic and CMC sections for IGT components, as well as the correlated modular component design scenarios, the following critical aspects have to be overcome:
I. Distinct anisotropy of the mechanical properties of CMC material.
II. Mechanical, thermal and thermos-mechanical limits of standard monolithic and CMC material.
III. Limits of erosion for the CMC material.
IV. Impact resistance of standard monolithic and CMC material.
V. Limits of high temperature chemical stability (ceramic corrosion) and oxidation for non-oxide ceramics leading to matrix & fibres properties degradation.
VI. High cost of individual CMC shells and liners sections.

The inventive object is obtained by an embodiment according to independent claim 1.

According to a first embodiment CMC material is designed with a customized/individualized fibre structure, where a certain percentage of the fibres exhibits a bigger diameter and which are intended to mainly carry the mechanical load within the CMC section of the hybrid IGT part' s during operation.

The connected second CMC sub-network, likewise build-up of 2D/3D textile structure with thinner fibres serves to fix the ceramic matrix to the overall fibre substructure and to deflect the local forces of mechanical loading into the ceramic matrix (kind of sacrificial" fibres substructure/network that will dissipate the energy and enable stress relaxation). The latter fibres are coated with a smooth protective coating and show a strong contact with the ceramic matrix. Not coated fibres are also an option, depending on the CMC system (i.e., material categories and processing routes) chosen. Innovative and advanced steps of the invention consist of a partial or total integration of these structures.

According to a further embodiment standard CMC structures can be improved by using sandwich system, which contain as internal structure a felt, fully or partly infiltrated in order to provide an internal cooling channel structure and/or insulation as well as reinforcement within the two CMC skin shells.

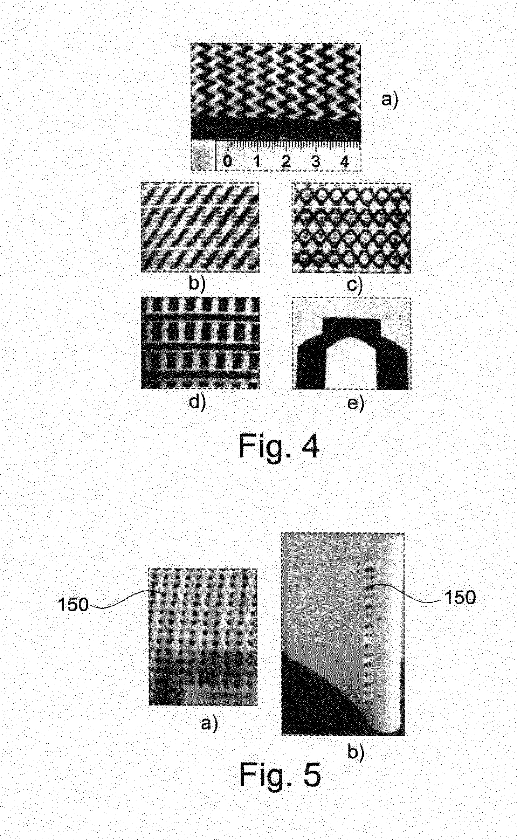

The cooling channels can be provided either by:
i) an open porous structure (e.g., partly infiltrated felt);
ii) an engineered porous structure with specifically designed structure, iii) a special CMC layer (or even multilayer structure) where the cooling structure is formed by elimination of specifically selected fibres (e.g., C-fibres) woven with a defined architecture (ref. to Fig.4). This elimination can be for example achieved by burning out of these specific fibres during the CMC system sintering process. This special CMC layer can be attached to a common CMC woven layer (or multilayer stack) as internal surface which is exposed to the internal cooling paths of the component, or as middle layer (multilayer stack construction) between two common CMC woven layers (or multilayer stacks) functioning as skins inner and outer skins of the sandwich structure.

Alternatively, cooling exits can also be included to interconnect individually cooled segments and/or to allow a direct film cooling.

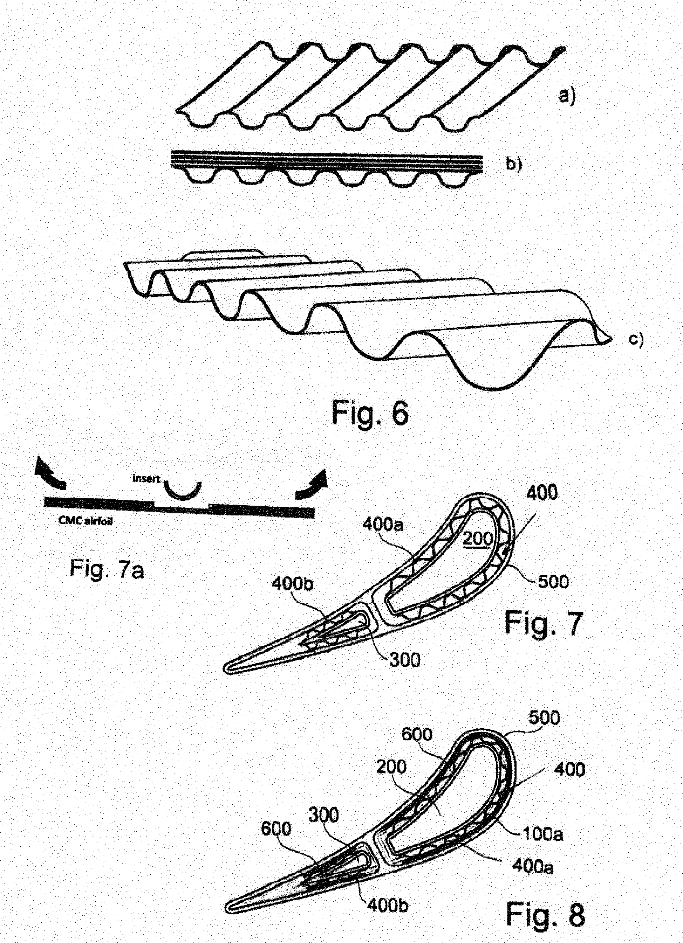

The additional use of a heat and oxidation resistant, flexible intermediate layer will compensate the CTE (Coefficient of Thermal Expansion) mismatch between the ceramic/CMC and metallic IGT core sections, such as between the central metallic core and the surrounding shell of rotating or stationary blading. It would also comprise a shock absorbing function in case of foreign object impact and avoid a complete disintegration of damaged CMC shell or liner system. Such 3D intermediate layer structure can be made of a 3D-structured metallic grid or in form of a corrugated metallic structure, exhibiting a honeycomb or any similar texture, or made of a simple "waved" ceramic structure as depicted in Fig.6, wherein the representations of these Figures 6a-c are common to a person skilled in the art.

The intermediate layer can also be a mix of metallic and ceramic structure, either under the form of a composite or as a stack-up of different layers.

Based on this set-up, it is easily possible to achieve the hole-diameter and correct angle of single CAH's (Cooling Air Hole) given by the design and to avoid a potential damaging of the fibres and/or woven CMC structure. In a subsequent step, the wrapped CMC material is infiltrated by a slurry technique, or impregnated by CVD or other method, or otherwise combined with the ceramic matrix material and finally (semi-)fired. The described steps can be repeated until reaching the intended CMC wall thickness needed for the individual IGT part section. The pins are inserted between the fibres of the textile going through the textile thickness without damaging the fibres but enabling the formation of holes that will be used as cooling holes. The pins are fixed into the mould in predetermined positions/anchoring holes After the drying of the CMC form around the mould, the pins can be removed, the CMC piece can be de-moulded and the CMC piece can finally be sintered. The shell can be easily withdrawn from the mould. In the case of a two piece or more shell (e.g. pressure and suction side segments) these are joined in a post heat treatment by a suitable method, such as active brazing or the application of high temperature cements.

For the generation of CMC sections, reinforced 2D woven inorganic textile sheet material (one or multiple layers) can be wrapped around a central metallic, polymer or ceramic 3D body that is used as mould. Such a mould might represent a turbine airfoil or inner/outer platform contour or other hot gas path components and can additionally also include local cooling air hole patterns (external film cooling). The final CMC body can be then positioned around a central metallic spar allowing a correct, precise positioning, mechanical support and, if necessary, enabling to cool the CMC airfoil shell.

In another embodiment, the CMC shell is manufactured as one singular part, including Suction Side (SS) and Pressure Side (PS) sections, whereas only the airfoil areas are infiltrated in a first step with the matrix material, dried and cured (including the concrete cooling hole-pattern). After accomplishment of this partial manufacturing, the CMC shell system is positioned around the central metallic core with a pre-positioned metallic interlayer structure. This interlayer is joined by active brazing, gluing with high temperature resistant cements, mechanical fixation or a combination of the mentioned methods around the central core. SS and PS CMC sections are then wrapped around the fully pre-manufactured and prepositioned inner Leading Edge (LE) and Trailing Edge (TE) section or other thermally and thermo-mechanically loaded areas, which are made of monolithic ceramic material or a combination of monolithic with CMC skins. Such inserts can also include an inner as well as interconnected outer cooling system.

The fixation of the CMC shell to the ceramic LE and TE inserts can be achieved by active brazing or application of high temperature cements, already including or followed by a specifically designed heat treatment.

A TBC (thermal barrier) or an EBC (environmental barrier) layer may be applied on the CMC shell or liner segment. This can be reached by using conventional thermal spray methods, such as HVOF, APS or air gun, dipping and other suited methods. Alternatively SPS, CVD, PVD, etc. can also be used. As last step, a drying and staggered curing heat treatment process chain follows.

In order to allow a reliable serial production of monolithic and CMC made sections, suited NDT methods, such as IR Thermography, high resolution CT and other technologies have to be applied during critical manufacturing steps within the overall process chain.

Basically, the disclosure proposes a sandwich arrangement comprising at least one, a partial or integral combination of the following structures:
a) At least one or two CMC skins surrounding a felt or composite woven textile structure;
b) Outer/inner structures where one CMC skin is attached to a felt, which forms the inner or the outer layer, or a composite woven textile structure, which forms the inner layer;
c) Reversed sandwich structure where the CMC having -a different structured skin, which forms a core of the structure surrounded by two skins made of ceramic felt;
d) Additional structure where a ceramic felt is the outer layer, the conventional CMC is the middle layer and the composite woven textile structure is the inner layer

Furthermore, the disclosure proposes a sandwich arrangement comprising at least one peripheral disposed ceramic panel and a ceramic felt being actively connected to the ceramic panel, wherein the ceramic felt is formed by a textile structure with a regularly or quasi-regularly structured woven fibres, wherein the fibres are made of at least one material and/or composition. At least one adhesive mean is provided between the underside of the ceramic panel and adjacent fibres.

But, if the felt is made by irregular fibres intermixed with each other as "spaghettis", these fibres are not woven as for a ceramic textile.

The invention concerns a sandwich arrangement comprising at least two peripheral disposed ceramic panels and a ceramic felt which is inserted between a first and second ceramic panel, wherein the material of the first ceramic panel being equal or different to the material of the second panel. The ceramic felt is formed by a textile structure with regularly or quasi-regularly structured woven fibres wherein the fibres are made of at least one material and/or composition. At least one adhesive mean is provided between the underside of the panels and adjacent fibres. The invention is as defined in the claims.

But, if the felt is made by irregular fibres intermixed with each other as "spaghettis", these fibres are not woven as for a ceramic textile.

The felt is within the sandwich.

This(ese) felt(s) can be integrated in the already existing manufacturing process of the CMC, i.e., without the need of additional gluing system or heat treatment. Could even use the same matrix material as for the CMC system used to form the sandwich in one and unique sintering heat treatment process step.

Furthermore, a sandwich arrangement comprising at least two peripheral disposed ceramic panels and a ceramic felt which is inserted between a first and second ceramic panel, wherein the material of the first ceramic panel being equal or different to the material of the second panel. The ceramic felt is formed by a textile structure with regularly or quasi-regularly structured woven fibres, wherein the fibres are made of at least one material and/or composition. The compound between the ceramic panels and the adjacent ceramic felt is reaching by cold-pressing of the various components of the sandwich arrangement, in the sense of a physically determined assembly.

Moreover, a sandwich arrangement comprising at least two peripheral disposed ceramic panels and a ceramic felt which is inserted between a first and second ceramic panel, wherein the material of the first ceramic panel being equal or different to the material of the second panel. The ceramic felt is formed by a textile structure with regularly or quasi-regularly structured woven fibres, wherein the fibres are made of at least one material and/or composition. The compound between the ceramic panels and the adjacent ceramic felt is reaching by hot pressing moulding of the various components of the sandwich arrangement, in the sense of a physically determined assembly.

The sandwich arrangement is characterised in that the ceramic panel, i.e., CMC layer or multi-layer and/or ceramic felt are built upon a multiwall structure, wherein the individual walls are spaced from each other, wherein the walls are mutually supported by a supporting structure, wherein resulting spaces between the supporting structures possess a light, medium or strong permeability so that targeted cooling action can be taken.

Furthermore, the ceramic panel consists of more plies, wherein the plies are made of the same material and composition or differentiated among themselves; at least one surface of the ceramic panel comprising one or more coating, and the sandwich structure comprising impregnated ceramic tissue in-between CMC skins, the sandwich arrangement comprising at least one intermediate ceramic panel.

The interspace between the first or second ceramic panel and intermediate ceramic panel is filled with a same or differentiated ceramic felt, wherein at least one ceramic panel or at least one intermediate ceramic panel and/or ceramic felt are provided with cooling holes and/or cooling channels. The mentioned cooling holes or cooling channels are arranged in-between of ceramic panels and/or ceramic felt.

The cooling medium through ceramic panel, intermediate ceramic panel, ceramic felt, is sealed off from the outside, wherein the cooling medium flowing partially or integrally through ceramic panel and/or intermediate ceramic panel and/or ceramic felt.

Moreover, the sandwich arrangement is used for a partial or integral employment in a hot gas path component of a turbomachinery or gas turbine engine. The hot gas path component corresponds to an airfoil of a rotor blade or stator vane, wherein the airfoil consisting of at least one flow-applied outer shell and at least one under-structure element. The flow-applied outer shell is formed as an uniform or segmented structure, complying with aerodynamic final aims of the airfoil in the flow direction of the working medium referring to the turbomachinery or gas turbine engine, wherein the airfoil under-structure element consisting of at least one intermediate shell and/or at least one spar.

The flow-applied outer shell is additionally equipped in the region of leading edge and/or trailing edge with an insert, wherein the insert is made of monolithic ceramic material or a combination of monolithic ceramic material with CMC skins, wherein the mentioned insert is provided with continuous and/or quasi-continuous cooling holes.

Summary, at least one innovative step of the disclosure consists of the fact that the integration of these engineered structures as insert in the hot gas path components, especially in the turbine blading modular design, is highly advantageous. Referring to the prior art, it is undisputed that any solution that would use standard porous ceramic material will not be enable of such high heat transfer coefficients and will have a much lower mechanical integrity.

In particular, these sandwich arrangements can be optimally used as modular parts within the hot gas path components of a gas turbine unit. Thus, temperatures about 1500° or 1600° or 1700°C can be dominated.

A further innovative step of the disclosure concerns the small size fibres sub-structure used as load distributor and damage containment of the system, improving the fracture toughness and the interlaminar shear behaviour of CMC multi-plies system. Furthermore, firstly, cooling structures in the CMC are generated by machining or other processes comprising cooling holes into the CMC. Secondly, the sandwich structure of CMC possesses cooling channels. This item is an extension of the first item, with the final aim to integrate these cooling channels via pre-designed cooling structure plies in between two skins of same or different composition, advantageously for an intercooled shell, meaning that the cooling is not going through the CMC shell whole thickness but is circulating within it, entrapped within the sandwich structure. As a further alternative to the first proposal, the locally arranged cooling holes can be generated through the CMC shell thickness, so that no rigid structure is more necessary, as can be variously seen from state of the art.

Thus, the present disclosure looks into a flexible spacing structure concept for reduction of CTE (Coefficient of Thermal Expansion) mismatch between the (metallic) spar and CMC shell and as support of the CMC shell which is submitted to very high pressures from the hot gas flow
Depending how the flexible spacing structure concept is made, it can allow a precisely guided cooling system in order to maintain the metallic core at a reasonable service temperature, or can function as thermal barrier between the CMC shell and the metallic spar reducing the thermal gradient taking place within the CMC shell structure.

Additionally, the disclosure comprising the following two types of arrangements:
i) Cooling structure systems using partially infiltrated felt of composite woven textile structures;
ii) Thermal resistant structures with fully impregnated felts.

The invention is as disclosed in the claims.

### Brief Description of the Drawings

The present invention is now be explained more closely by means of different embodiments and with reference to the attached drawings.
- Figure 1: shows a sandwich arrangement;
- Figure 2: shows an enlarged view of a region of Figure 1 reflecting most simple type of CMC fabric texture;
- Figure 3: shows a cross sectional view of the region according to Figure 2, as seen along line Figure 3-Figure 3;
- Figures 4a-d: show various textile architectures reflecting mixed CMC textures, carbon fibres woven together with ceramic fibres, oxide or non-oxide;
- Figures 5a-b: show further textile architectures including an integration of cooling holes in textiles;
- Figures 6a-c: show an intermediate layer which is designated as flexible layer that will i) compensate the CTE (Coefficient of Thermal Expansion) mismatch between the metallic core of hot gas path components and the ceramic shell; ii) support the CMC structure in case of FOD (Foreign Object Damage) (flexible backup structure); iii) act as substructure for cooling air distribution;
- Figure 7: shows a cross-section through a rotor blade or stator vane airfoil, in the case an additional use of an intermediate layer, which is composed of a honeycomb-like structure;
- Figure 7a: shows a summarised flexible concept of a CMC airfoil with reinforcement feature;
- Figure 8: shows a cross-section through a rotor blade or stator vane airfoil, in the case an additional use of at least one intermediate layer, which is composed of a honeycomb-like structure, wherein at least one intermediate layer is integrally or quasi-integrally embedded in a ceramic felt, which fills the spaces between the spar and the outer shell;
- Figure 9: shows a further airfoil embodiment, which largely corresponds to the preceding figures 7 and 8, wherein the space between the flow-applied outer shell and relatives spars is bridged by regularly or irregularly distributed elevations or contact points;
- Figure 9a-b: show various configured ropes;
- Figure 10: shows a further airfoil embodiment, which largely corresponds to the preceding figures 7 and 8, wherein the space between the flow-applied outer shell and relatives spars is bridged by regularly or irregularly distributed elevations, wherein at least one intermediate layer is integrally or quasi-integrally embedded in a ceramic, which fills the spaces between the spar(s) and outer shell;

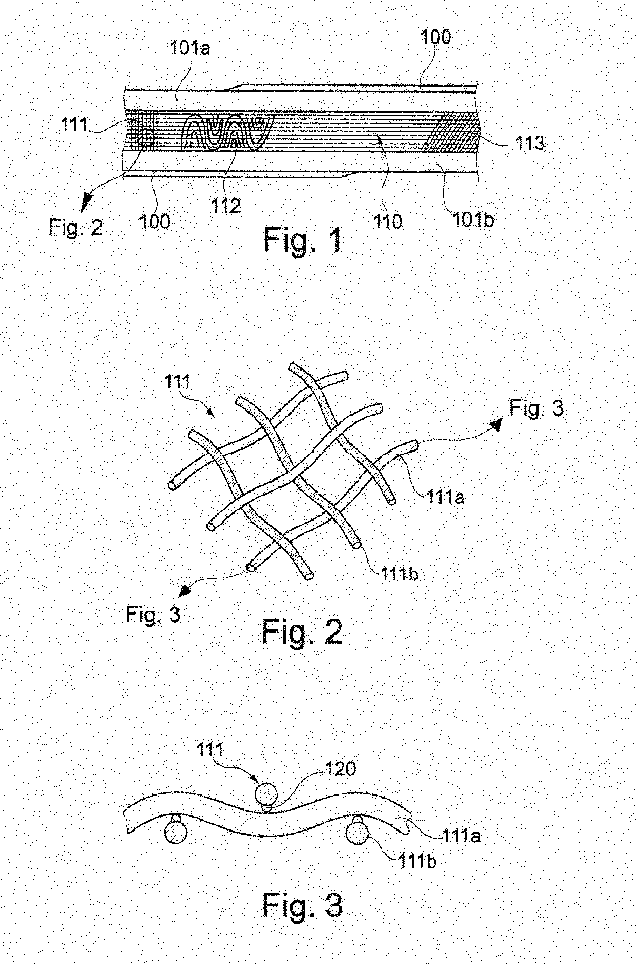

- Figure 1 0a-b: show various configured ropes or spacing modules;

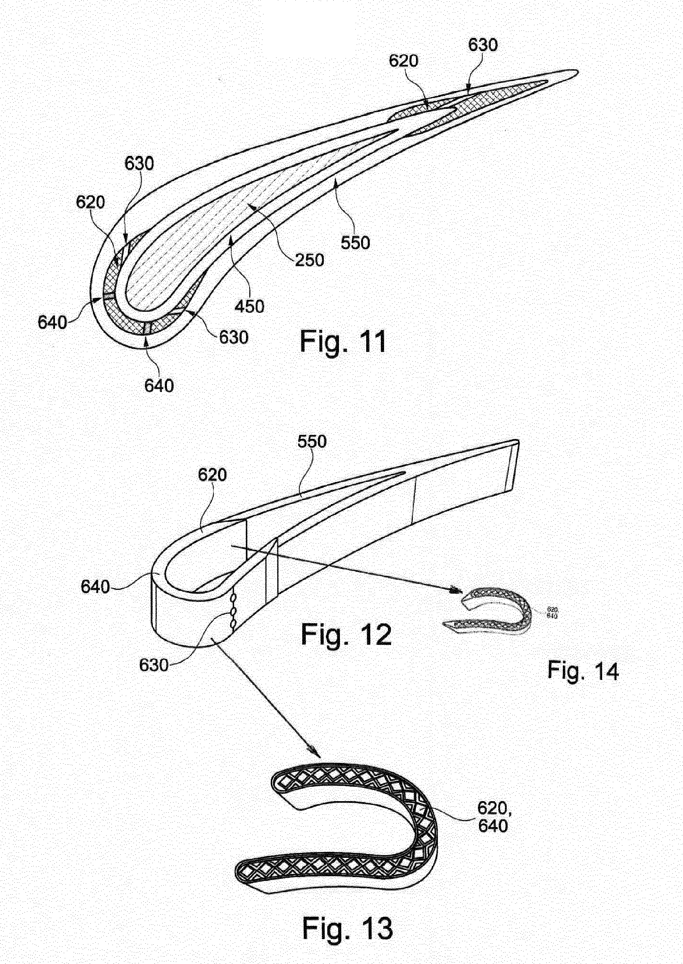

- Figure 11: shows a further embodiment which is provided with two reinforcement inserts at the LE and TE, respectively;
- Figure 12: shows the positioned insert in connection with an airfoil;
- Figure 13: shows the internal structure of a LE insert comprising structured/controlled porous architecture enabling a strong and very efficient cooling of the insert.
- Figure 14: shows the internal structure of a LE insert comprising a special structured/controlled porous architecture enabling a strong and very efficient cooling of the insert.

### Detailed Description of Exemplary Embodiments of the Invention

Figure 1 shows a partial longitudinal section through an embodiment of multi-plies CMC provided as a sandwich system. Fundamentally, the embodiment CMC material can be designed with individualized fibre structure in accordance with the operational requirements. A certain percentage of the fibres exhibits differentiated diameters, which are intended to mainly carry the mechanical load (in the case of the larger diameters) within the CMC section of the hot gas path parts during operation. The outermost panels 101a, 101b of the sandwich system (100, 101a, b, 110, ....) consist of one or more plies, wherein at least one of the panel 101 possesses an integral or quasi-integral smooth protective coating 100 having a strong contact with the adjacent ceramic structure of the panel. In many applications, but not exclusively, it is preferably that the fibres of the first panel 101a have the same composition and/or material as the fibres of the second panel 101b, which is disposed on the opposite side. The fibres of the first and second panels may be impregnated with the same or different material and it may be provided that only part of the circumference of the fibres are impregnated, wherein the impregnated side is designed as a function of the installation, for example, that the impregnated side of the fibres is the side which is bonded to the first or second layer 101a, 101b.

The mentioned layers can consist of a laminate structure, such that an appropriate bond between the single intermediate layers (different textile plies) is achieved. Furthermore, the layers can be formed by a multiple sandwich structure.

The intermediated ceramic felt 110 between the panels, likewise build-up of 2D/3D textile structure with thinner fibres, serves to fix the ceramic matrix to the overall fibre substructure and to deflect the local forces of mechanical loading into the ceramic matrix. As shown in Figure 1, items 111, 112, 113, the fibres of the intermediate ceramic felt 110 can be differently woven using the same or different materials, such that the contact surface within the ceramic felt and on each side of the panels comprises both first and second fibre materials. The architecture according to item 111 represents a rectangular or quasi-rectangular weaving, the architecture according to item 113 represents an oblique or quasi-oblique or non-rectangular angulation weaving; the architecture according to item 112 represents sinusoidal or quasi-sinusoidal interdigitated weaving. Any stacking-sequence of different woven fibres (111, 112, 113, etc.) within the thickness of the sandwich arrangement is also possible.

Figure 2 shows the external surface of the fibres 111a and 111b within the ceramic felt 110 based on the woven sector 111. The external surface of the fibres 111a, 111b is exposed equally on both sides of the structured three-dimensional, such that the contact surface on each comprises both first and second materials of the fibres. Figure 3 shows a sectional view of the weave along line Fig.3-Fig.3 as shown in Figure 2. In this field, single fibre or several fibres 111a, 111b comprise in the circumferential direction regularly or irregularly arranged ropes or punctual particles attached to the fibres 120 for a maximized friction with each other (111a, 111b) and within the whole structure of the ceramic felt 110.

Figure 4 shows various textile architectures (a-e) of sandwich structures, wherein Figure 5 (a, b) shows an exemplary integration of cooling holes (effusion and/or convective and/or impingement cooling) in textiles: Textiles woven with integrated hole-structure 150 used in hot areas where film cooling must be implemented. It can be under the form of a single cooling holes row or of cooling holes that are extending also over a wider area.

Figure 6 shows an intermediate layer which is designated as flexible layer that will compensate the CTE (Coefficient of Thermal Expansion) mismatch between the metallic core of hot gas path components and the ceramic shell. The intermediate layer can be made of a 3D-structured metallic grid (not depicted in the Figure 6) or as an undulated metallic or ceramic structure, e.g. honeycomb-like, (see Figures a-c).

Figures 7 to 10 show a cross-section through a rotor blade or stator vane airfoil. The interior of the airfoil is provided with a perpendicular oriented and modular spar (made of one or several modules), which divides the interior into two individualized parts, namely spar 1 (item 200) and spar 2 (item 300). It could also be made of more than 2 spar modules.

Figure 7 shows an additional use of an intermediate layer 400, which, for example, is composed of a honeycomb-like structure. A flexible intermediate layer 400 consists of a heat and oxidation resistant material and can be compensated the CTE (Coefficient of Thermal Expansion) mismatch between the ceramic/CMC composed surrounding and flow-applied outer shell 500 and metallic spars 200, 300. The intermediate layers 400a (associated with spar 1) and 400b (associated with spar 2) can comprise the faculty to absorb any shock in case of foreign object impact and avoid a complete disintegration of damaged CMC outer shell 500 or other liner systems. Such an intermediate layer can also function as a spacer. Such 3D intermediate layer structure can be made of a 3D-structured metallic grid or in form of a corrugated metallic structure, exhibiting a honeycomb-like or any similar texture.

Figure 7a shows a CMC sections. Reinforced 2D woven inorganic textile sheet material (one or multiple layers) can be wrapped around a central metallic, polymer or ceramic 3D body that is used as mould. Such a mould might represent a turbine airfoil or inner/outer platform contour or other hot gas path components and can additionally also include local cooling air hole patterns (external film cooling). The final CMC body can be then positioned around a central metallic spar (see Figure 7, items 200, 300) allowing a correct, precise positioning, mechanical support and, if necessary, enabling to cool the CMC airfoil shell.

Figure 8 shows an additional use of an intermediate layer 400, which, for example, is composed of a honeycomb-like structure. A flexible intermediate layer 400 consists of a heat and oxidation resistant material and can be compensated the CTE (Coefficient of Thermal Expansion) mismatch between the ceramic/CMC composed surrounding and flow-applied outer shell 500 and metallic spars 200, 300. The intermediate layers 400a (associated with spar 1), 400b (associated with spar 2) can comprise the faculty to absorb any shock in case of foreign object impact and avoid a complete disintegration of damaged CMC outer shell 500 or other liner systems. Such 3D intermediate layer structure can be made of a 3D-structured metallic grid or in form of a corrugated metallic structure, exhibiting a honeycomb-like or any similar texture. Additionally, the intermediate layers 400a, 400b are integrally or quasi-integrally embedded in a ceramic felt 600, which fills the spaces between the spar(s) and outer shell. The core of at least one intermediate space (not shown) may be filled with ceramic felt, with different/varying composite and consistency, as required.

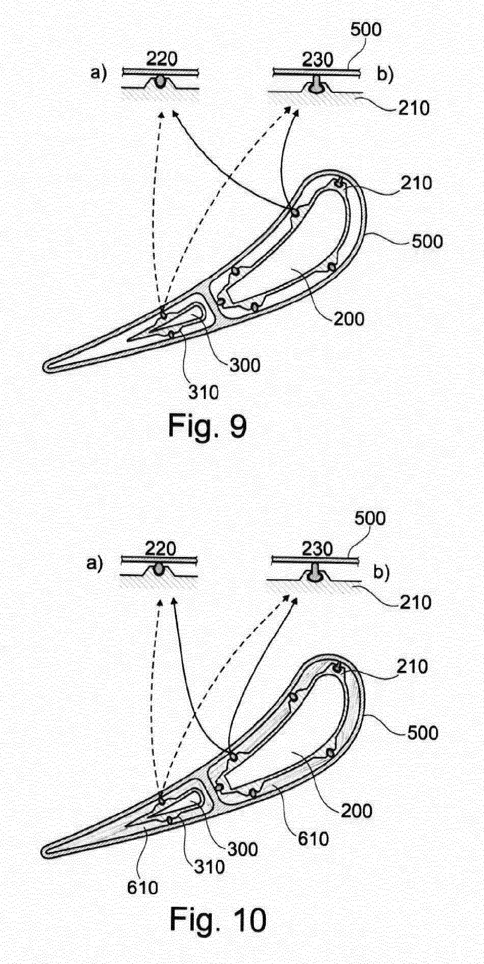

Figure 9 shows a further airfoil embodiment, which largely corresponds to the preceding figures 7 and 8. The space between the flow-applied outer shell 500 and spars 200, 300 is bridged by regularly or irregularly distributed elevations 210, 310, which are equipped with differently configured ropes/spacing points, namely round 220 and/or T-shape 230 ropes, whereby such an arrangement comprises the faculty to absorb any shock of foreign object impact and can be compensated the CTE (Coefficient of Thermal Expansion) mismatch between the surrounding and flow-applied outer shell 500 and metallic spars 200, 300.

Figure 10 shows a further airfoil embodiment, which largely corresponds to the preceding figures 7 and 8. The space between the outer shell 500 and spars 200, 300 is bridged by regularly or irregularly distributed elevations 210, 310, which are equipped with differently configured ropes, namely round 220 and/or T-shape 230 ropes, whereby such an arrangement comprises the faculty to absorb any shock of foreign object impact and can be compensated the CTE (Coefficient of Thermal Expansion) mismatch between the surrounding and flow-applied outer shell 500 and metallic spars 200, 300. Additionally, the intermediate layers 400a, 400b are integrally or quasi-integrally embedded in a ceramic felt 610, which fills the spaces between the spar(s) and outer shell.

In another embodiment according to Figure 11, the CMC shell 550 is manufactured as one singular part, including Suction Side (SS) and Pressure Side (PS) sections, whereas only the airfoil areas are infiltrated in a first step with the matrix material, dried and cured (including the concrete cooling hole-pattern). After accomplishment of this partial manufacturing, the CMC shell system is positioned around the central metallic core (spar) 250 with a pre-positioned metallic interlayer structure. This intermediate layer 450 is joined by active brazing, gluing with high temperature resistant cements, mechanical fixation or a combination of the mentioned method s around the spar 250 (metallic central core). SS and PS CMC sections are then wrapped around the fully pre-manufactured and prepositioned inner Leading Edge (LE) and Trailing Edge (TE) section or other thermally and thermos-mechanically loaded areas, which are made of monolithic ceramic material or a combination of monolithic with CMC skins. Such reinforcement inserts 620 can also include an inner as well as interconnected outer cooling system 630. This system can be either emergency cooling holes as designed or directly through-going CAHs. Emergency cooling holes that get open to the outer shell surface in case of shell gets damages.

These holes could also be designed from the beginning as through-going CAHs depending on the outer surface cooling requirements of the part.

Each of Figures 12, 13, and 14 show an additional porous body 640 as a natural continuation of the insert 620, strictly positioned in the area of the leading edge LE. The interior of the insert 620 may have a structured porous structure creating interconnected cooling cavities (see Figure 13 and 14) or an unsorted filling with a ceramic material such as a felt, wherein the density and/or permeability can be varied as required.

### List of Reference Numerous

- Sandwich Arrangement: 100, 101a, 101b, 110, .....
- 100: Coating
- 101a: Ceramic first panel
- 101b: Ceramic second panel
- 110: Ceramic felt
- 111: Woven structure
- 111a: External structure of the fibres
- 111b: External structure of the fibres
- 112: Woven structure
- 113: Woven structure
- 120: Fibre ropes
- 150: Textiles woven with integrated hole-structure
- 200: Spar
- 210: Elevations
- 220: Round ropes
- 230: T-shape ropes
- 250: Spar
- 300: Spar
- 310: Elevations
- 400: Intermediate layer
- 400a: Intermediate layer associated with spar 200
- 400b: Intermediate layer associated with spar 300
- 450: Intermediate layer
- 500: Flow-applied outer shell
- 550: CMC shell
- 600: Ceramic felt
- 610: Ceramic felt
- 620: Reinforcement insert with controlled/engineered porous structure
- 630: Cooling system

- 640: Porous body
- SS: Suction side
- PS: Pressure side
- LE: Leading edge
- TE: Trailing edge

## Claims

1. Sandwich arrangement of a multi-plies CMC material comprising at least two peripheral disposed ceramic panels (101a, 101b), and a ceramic felt (110) which is inserted between a first and second ceramic panel (101a, 101b), wherein the material of the first ceramic panel (101a) is equal or different to the material of the second ceramic panel (101b), wherein the ceramic felt (110) is formed by a textile structure with a regularly or quasi-regularly structured woven fibres, wherein the fibres are made of at least one material and/or composition, wherein at least one adhesive mean is provided between the underside of the ceramic panels (101a, 101b) and the adjacent fibres of the ceramic felt (110); **characterized in that** the CMC material has a fibre structure comprising a certain percentage of fibres which exhibit a bigger diameter and are intended to mainly carry mechanical loads, and a second connected CMC sub-network, likewise build-up of 2D/3D textile structure, with thinner fibres which serves to fix the ceramic matrix of the ceramic panels to the overall fibre substructure and to deflect the local forces of mechanical loading into the ceramic matrix; and **in that** the intermediated ceramic felt (110) between the panels (101a, 101b), likewise build-up of 2D/3D textile structure with thinner fibres, serves to fix the ceramic matrix to the overall fibre substructure and to deflect the local forces of mechanical loading into the ceramic matrix.

2. The sandwich arrangement according to claim 1, **characterised in that** the ceramic panel and/or ceramic felt are built upon a multiwall structure, wherein the individual walls are spaced from each other, wherein the walls are mutually supported by a supporting structure, wherein resulting spaces between the supporting structures possess a light, medium or strong permeability.

3. The sandwich arrangement according to claim 1 or 2, **characterised in that** the ceramic panel consists of one or more plies, wherein the plies are made of the same material and composition or differentiated among themselves.

4. The sandwich arrangement according to one of the claims 1 to 2, **characterised in that** at least one surface of the ceramic panel comprises one or more coatings.

5. The sandwich arrangement according to one of the claims 1 to 4, **characterised in that** the sandwich material consists of a wrapped CMC material, which is partly or fully infiltrated by a slurry technique, or impregnated by CVD or other method.

6. The sandwich arrangement according to one of the claims 1-5, **characterised in that** the sandwich arrangement comprises at least one intermediate ceramic panel.

7. The sandwich arrangement according to claim 6, **characterised in that** the interspace between the first or second ceramic panel and intermediate ceramic panel is filled with a same or differentiated ceramic felt.

8. The sandwich arrangement according to one or more of the claims 1 to 7, **characterised in that** at least one ceramic panel and/or ceramic felt are provided with cooling holes and/or cooling channels.

9. The sandwich arrangement according to claim 8, **characterised in that** the cooling holes or cooling channels are arranged in-between of ceramic panels and/or ceramic felt.

10. The sandwich arrangement according to claim 8 or 9, **characterised in that** the flow of a cooling medium through the ceramic panel and/or the ceramic felt is sealed off from the outside.

11. The sandwich arrangement according to claim 8 or 9, **characterised in that** a cooling medium flowing partially or integrally through the ceramic panel and/or the ceramic felt.

12. The sandwich arrangement according to one of the claims 1 to 11 for a partial or integral use in hot gas path components of a turbomachinery or gas turbine engine.

13. The sandwich arrangement according to claim 12, **characterised in that** the hot gas path component corresponds to an airfoil of a rotor blade or stator vane, wherein the airfoil consisting of at least one flow-applied outer shell and at least one under-structure element, wherein the flow-applied outer shell is formed as an uniform or segmented structure.

14. The sandwich arrangement according to claim 13, **characterised in that** the airfoil under-structure element consisting of at least one intermediate shell and/or at least one spar (200, 300).

15. The sandwich arrangement according to one of the claims 13 or 14, **characterised in that** the flow-applied outer shell is additionally equipped in the region of leading edge and/or trailing edge with an insert, wherein the insert is made of monolithic ceramic material or a combination of monolithic ceramic material with CMC skins.

16. The sandwich arrangement according to claim 15, **characterised in that** the insert is provided with a structured internal cooling structure.

17. The sandwich arrangement according to claim 16, **characterised in that** the insert is provided with continuous and/or quasi-continuous cooling holes serving as emergency cooling system.

## Patentansprüche

1. Sandwichanordnung eines Mehrschicht-Keramikmatrixverbundwerkstoff-Materials (CMC - Ceramic Matrix Composite), das mindestens zwei randständig angeordnete Keramikplatten (101a, 101b) und einen Keramikfilz (110) umfasst, der zwischen einer ersten und einer zweiten Keramikplatte (101a, 101b) eingefügt ist, wobei das Material der ersten Keramikplatte (101a) gleich dem Material der zweiten Keramikplatte (101b) ist oder sich von diesem unterscheidet, wobei der Keramikfilz (110) durch eine Textilstruktur mit regelmäßig oder quasi-regelmäßig strukturierten gewebten Fasern ausgebildet ist, wobei die Fasern aus mindestens einem Material und/oder einer Zusammensetzung hergestellt sind, wobei mindestens ein Klebemittel zwischen der Unterseite der Keramikplatten (101a, 101b) und den anliegenden Fasern des Keramikfilzes (110) vorgesehen ist; **dadurch gekennzeichnet, dass** das CMC-Material eine Faserstruktur hat, die einen bestimmten Prozentsatz von Fasern umfasst, die einen größeren Durchmesser aufweisen und dazu gedacht sind, dass sie hauptsächlich mechanische Lasten aufnehmen, und ein zweites verbundenes CMC-Unternetzwerk, das ebenfalls aus einer 2D/3D-Textilstruktur aufgebaut ist, mit inneren Fasern, die dazu dienen, die Keramikmatrix der Keramikplatten an der gesamten Faserunterstruktur zu fixieren und die lokalen Kräfte einer mechanischen Belastung in die Keramikmatrix abzuleiten; und dass der dazwischenliegende Keramikfilz (110) zwischen den Platten (101a, 101b), der ebenfalls aus einer 2D/3D-Textilstruktur mit dünneren Fasern aufgebaut ist, dazu dient, die Keramikmatrix an der Gesamtfaserunterstruktur zu fixieren und die lokalen Kräfte einer mechanischen Belastung in die Keramikmatrix abzuleiten.

2. Sandwichanordnung gemäß Anspruch 1, **dadurch gekennzeichnet, dass** die Keramikplatte und/oder der Keramikfilz auf einer Mehrwandstruktur aufgebaut sind, wobei die einzelnen Wände voneinander beabstandet sind, wobei die Wände über eine Stützstruktur gegenseitig abgestützt sind, wobei die entstehenden Zwischenräume zwischen den Stützstrukturen eine leichte, mittlere oder starke Permeabilität besitzen.

3. Sandwichanordnung gemäß Anspruch 1 oder 2, **dadurch gekennzeichnet, dass** die Keramikplatte aus einer oder mehreren Lagen besteht, wobei die Lagen aus demselben Material und derselben Zusammensetzung hergestellt sind oder sich voneinander unterscheiden.

4. Sandwichanordnung gemäß einem der Ansprüche 1 bis 2, **dadurch gekennzeichnet, dass** mindestens eine Oberfläche der Keramikplatte eine oder mehrere Beschichtungen umfasst.

5. Sandwichanordnung gemäß einem der Ansprüche 1 bis 4, **dadurch gekennzeichnet, dass** das Sandwichmaterial aus einem umhüllten CMC-Material besteht, das teilweise oder ganz über ein Schlickerverfahren infiltriert oder durch CVD oder ein anderes Verfahren imprägniert ist.

6. Sandwichanordnung gemäß einem der Ansprüche 1 bis 5, **dadurch gekennzeichnet, dass** die Sandwichanordnung mindestens eine Zwischen-Keramikplatte umfasst.

7. Sandwichanordnung gemäß Anspruch 6, **dadurch gekennzeichnet, dass** der Zwischenraum zwischen der ersten oder der zweiten Keramikplatte und der Zwischen-Keramikplatte mit einem selben oder einem anderen Keramikfilz gefüllt ist.

8. Sandwichanordnung gemäß einem der Ansprüche 1 bis 7, **dadurch gekennzeichnet, dass** mindestens eine Keramikplatte und/oder Keramikfilz mit Kühlöffnungen und/oder Kühlkanälen ausgestattet sind.

9. Sandwichanordnung gemäß Anspruch 8, **dadurch gekennzeichnet, dass** die Kühlöffnungen oder Kühlkanäle zwischen Keramikplatten und/oder Keramikfilz angeordnet sind.

10. Sandwichanordnung gemäß Anspruch 8 oder 9, **dadurch gekennzeichnet, dass** die Strömung eines Kühlmediums durch die Keramikplatte und/oder den Keramikfilz gegenüber der Außenseite abgedichtet ist.

11. Sandwichanordnung gemäß Anspruch 8 oder 9, **dadurch gekennzeichnet, dass** ein Kühlmedium teilweise oder ganz durch die Keramikplatte und/oder den Keramikfilz strömt.

12. Sandwichanordnung gemäß einem der Ansprüche 1 bis 11 für eine teilweise oder ganze Verwendung in Heißgas-Pfad-Komponenten einer Turbomaschine oder einer Gasturbine.

13. Sandwichanordnung gemäß Anspruch 12, **dadurch gekennzeichnet, dass** die Heißgas-Pfad-Komponente einem Schaufelprofil einer Rotorschaufel oder einer Statorschaufel entspricht, wobei das Schaufelprofil mindestens teilweise aus einer dem Strom ausgesetzten äußeren Schale und mindestens einem Unterstrukturelement besteht, wobei die der Strömung ausgesetzte äußere Schale als eine gleichmäßige oder segmentierte Struktur ausgebildet ist.

14. Sandwichanordnung gemäß Anspruch 13, **dadurch gekennzeichnet, dass** das Schaufelprofil-Unterstrukturelement aus mindestens einer Zwischenschale und/oder mindestens einem Holm (200, 300) besteht.

15. Sandwichanordnung gemäß einem der Ansprüche 13 oder 14, **dadurch gekennzeichnet, dass** die der Strömung ausgesetzte äußere Schale in dem Bereich der Vorderkante und/oder Hinterkante zusätzlich mit einem Einsatz ausgerüstet ist, wobei der Einsatz aus monolithischem Keramikmaterial oder einer Kombination aus monolithischem Keramikmaterial mit CMC-Außenhäuten hergestellt ist.

16. Sandwichanordnung gemäß Anspruch 15, **dadurch gekennzeichnet, dass** der Einsatz mit einer strukturierten inneren Kühlstruktur ausgestattet ist.

17. Sandwichanordnung gemäß Anspruch 16, **dadurch gekennzeichnet, dass** der Einsatz mit durchgehenden und/oder quasi-durchgehenden Kühlöffnungen ausgestattet ist, die als ein Notkühlsystem dienen.

## Revendications

1. Agencement en sandwich d'un matériau CMC à plusieurs couches comprenant au moins deux panneaux de céramique périphériques (101a, 101b) et un feutre de céramique (110) qui est inséré entre un premier et un deuxième panneaux de céramique (101a, 101b), dans lequel le matériau du premier panneau de céramique (101a) est identique à ou différent du matériau du deuxième panneau de céramique (101b), dans lequel le feutre de céramique (110) est formé par une structure textile qui présente des fibres tissées structurées de manière régulière ou quasi régulière, dans lequel les fibres sont constituées d'au moins un matériau et/ou une composition, dans lequel au moins un moyen adhésif est prévu entre la sous-face des panneaux de céramique (101a, 101b) et les fibres adjacentes du feutre de céramique (110) ; **caractérisé en ce que** le matériau CMC présente une structure de fibres comprenant un certain pourcentage de fibres qui présentent un plus grand diamètre et sont principalement destinées à porter des charges mécaniques, et un deuxième sous-réseau CMC connecté, également composé d'une structure textile en 2D/3D, avec des fibres plus fines, qui sert à fixer la matrice de céramique des panneaux de céramique sur la sous-structure à fibres globale et à dévier les forces locales de chargement mécanique vers la matrice de céramique ; et **en ce que** le feutre de céramique interposé (110) entre les panneaux (101a, 101b), également composé d'une structure textile en 2D/3D avec des fibres plus fines, sert à fixer la matrice de céramique sur la sous-structure à fibres globale et à dévier les forces locales de chargement mécanique vers la matrice de céramique.

2. Agencement en sandwich selon la revendication 1, **caractérisé en ce que** le panneau de céramique et/ou le feutre de céramique sont prévus sur une structure à plusieurs parois, dans lequel les parois individuelles sont espacées les unes des autres, dans lequel les parois sont mutuellement supportées par une structure de support, dans lequel les espaces résultants entre les structures de support présentent une perméabilité faible, moyenne ou élevée.

3. Agencement en sandwich selon la revendication 1 ou 2, **caractérisé en ce que** le panneau de céramique se compose d'une ou plusieurs couche(s), dans lequel les couches sont composées du même matériau et de la même composition ou sont différentiées entre elles.

4. Agencement en sandwich selon l'une des revendications 1 à 2, **caractérisé en ce qu'**au moins une surface du panneau de céramique comprend un ou plusieurs revêtement(s).

5. Agencement en sandwich selon l'une des revendications 1 à 4, **caractérisé en ce que** le matériau en sandwich se compose d'un matériau CMC enveloppé, qui est partiellement ou entièrement infiltré par une technique de boue, ou imprégné par dépôt chimique en phase vapeur ou un autre procédé.

6. Agencement en sandwich selon l'une des revendications 1 à 5, **caractérisé en ce que** l'agencement en sandwich comprend au moins un panneau de céramique intermédiaire.

7. Agencement en sandwich selon la revendication 6, **caractérisé en ce que** l'espace entre le premier ou le deuxième panneau de céramique et le panneau de céramique intermédiaire est rempli avec un feutre de céramique identique ou différent.

8. Agencement en sandwich selon une ou plusieurs des revendications 1 à 7, **caractérisé en ce qu'**au moins un panneau de céramique et/ou le feutre de céramique est/sont muni(s) d'orifices de refroidissement et/ou de canaux de refroidissement.

9. Agencement en sandwich selon la revendication 8, **caractérisé en ce que** les orifices de refroidissement ou les canaux de refroidissement sont prévus entre les panneaux de céramique et/ou le feutre de céramique.

10. Agencement en sandwich selon la revendication 8 ou 9, **caractérisé en ce que** la circulation d'un milieu réfrigérant à travers le panneau de céramique et/ou le feutre de céramique est isolée de l'extérieur.

11. Agencement en sandwich selon la revendication 8 ou 9, **caractérisé en ce qu'**un milieu réfrigérant circule partiellement ou intégralement à travers le panneau de céramique et/ou le feutre de céramique.

12. Agencement en sandwich selon l'une des revendications 1 à 11 destiné à un usage partiel ou intégral dans des composants de trajet de gaz chaud d'une turbomachine ou d'un moteur à turbine à gaz.

13. Agencement en sandwich selon la revendication 12, **caractérisé en ce que** le composant de trajet de gaz chaud correspond à une surface portante d'une pale de rotor ou d'une aube de stator, dans lequel la surface portante se compose d'au moins une coque externe en contact avec l'écoulement et d'au moins un élément de sous-structure, dans lequel la coque externe en contact avec l'écoulement est formée comme une structure uniforme ou segmentée.

14. Agencement en sandwich selon la revendication 13, **caractérisé en ce que** l'élément de sous-structure de surface portante est composé d'au moins une coque intermédiaire et/ou d'au moins un longeron (200, 300).

15. Agencement en sandwich selon l'une des revendications 13 ou 14, **caractérisé en ce que** la coque externe en contact avec l'écoulement est en outre équipée, dans la zone du bord d'attaque et/ou du bord de fuite, d'un insert, dans lequel l'insert est composé d'un matériau céramique monolithique ou d'une combinaison d'un matériau céramique monolithique avec des revêtements en CMC.

16. Agencement en sandwich selon la revendication 15, **caractérisé en ce que** l'insert est équipé d'une structure de refroidissement interne structurée.

17. Agencement en sandwich selon la revendication 16, **caractérisé en ce que** l'insert est équipé d'orifices de refroidissement continus et/ou quasi continus qui servent de système de refroidissement d'urgence.
